# EUROPEAN PATENT APPLICATION

(11) **EP 4 503 161 A1**
(43) Date of publication of application: **05.02.2025**
(21) Application number: 22934200.1
(22) Date of filing: 31.03.2022
(51) Int. Cl.: H01M 4/13, H01M 4/62, H01M 10/0525

(54) **ELECTROCHEMICAL APPARATUS AND ELECTRONIC APPARATUS**

(71) Applicant: Ningde Amperex Technology Limited, Ningde, Fujian 352100 (CN)
(72) Inventor: WANG, Xingyong, Ningde, Fujian 352100 (CN)
(74) Representative: Klunker IP Patentanwälte PartG mbB
(86) International application number: PCT/CN2022/084452
(87) International publication number: WO 2023/184358

(57) **Abstract**

An electrochemical apparatus is provided, including an electrode assembly. The electrode assembly includes an electrode plate, the electrode plate includes a current collector, and the current collector includes a first region and a second region. An active material layer is disposed in the first region, a functional layer is disposed in the second region, and a volume ratio of the functional layer to the active material layer is R, where 1%≤R≤10%. The electrochemical apparatus of this application has a high electrolyte retention amount, a smooth appearance, and a good cycling performance. An electronic apparatus including such electrochemical apparatus is also provided.

## Description

### TECHNICAL FIELD

This application relates to the field of energy storage, and specifically, to an electrochemical apparatus and an electronic apparatus.

### BACKGROUND

Due to advantages such as high energy density, good cycling performance, environmental friendliness, safety, and lack of memory effect, the secondary batteries (electrochemical apparatuses) are widely used in fields such as portable electronic products, electric transportation, and energy storage. However, with the development of technology, the requirements for the energy density and cycle life of the secondary batteries are increasingly high. In the secondary battery, the electrolyte addition amount (an electrolyte retention amount) is a key factor not only affecting the cycle life of the battery but also affecting the shipment standards for battery appearance. An insufficient electrolyte addition amount cannot effectively compensate for the consumption of electrolyte during cycling, which is not conducive to the long cycle life of the battery. Therefore, surplus electrolyte needs to be injected into the battery. However, the surplus electrolyte easily moves unevenly within a packaging bag (for example, an aluminum plastic film), causing an unsmooth surface of the battery, thus leading to poor battery appearance and energy density loss. The problem to be resolved currently is how to both increase the electrolyte retention amount of the secondary battery and effectively alleviate electrolyte swelling to meet the shipment standards for secondary battery appearance.

### SUMMARY

In view of the above problem in the prior art, this application provides an electrochemical apparatus and an electronic apparatus including such electrochemical apparatus to increase the electrolyte retention amount of the electrochemical apparatus, enhancing the cycling performance and alleviating electrolyte swelling for appearance improvement.

According to a first aspect, this application provides an electrochemical apparatus, including an electrode assembly. The electrode assembly includes an electrode plate, the electrode plate includes a current collector, and the current collector includes a first region and a second region. An active material layer is disposed in the first region, a functional layer is disposed in the second region, and a volume ratio of the functional layer to the active material layer is R, where 1%≤R≤10%. The inventors of this application have found that applying a functional layer capable of absorbing the electrolyte to a current collector region of the electrode plate uncoated with an active material, with the volume ratio of the functional layer to the active material layer controlled within the aforementioned range, can increase the electrolyte retention amount of the electrochemical apparatus, improving the cycling performance. Such application can also prevent an unsmooth surface of the electrochemical apparatus caused by uneven movement of the surplus electrolyte in the packaging bag (for example, an aluminum plastic film), thus improving the appearance flatness of the electrochemical apparatus, reducing energy density loss. In some embodiments, the functional layer can absorb the electrolyte.

According to some embodiments of this application, the electrochemical apparatus satisfies R≥k/(D×P), where D represents a swelling degree of the functional layer, P represents a porosity of the active material layer, and 0.004≤k≤0.008. When the above relationship is satisfied, the electrochemical apparatus has excellent cycling performance and low energy density loss.

According to some embodiments of this application, the swelling degree of the functional layer is D, and 200%≤D≤800%. When the swelling degree of the functional layer is less than 200%, the electrolyte retention rate of the functional layer is low, which is not conducive to improving the appearance of the electrochemical apparatus. When the swelling degree of the functional layer is greater than 800%, the functional layer itself has poor stability and is likely to fall off during cycling, thus affecting the improvement effect for appearance and the subsequent cycling electrical performance. In some embodiments, the swelling degree of the functional layer is 300% to 600%.

According to some embodiments of this application, the porosity of the active material layer is P, and 5%≤P≤25%. The porosity of the active material layer determines the electrolyte infiltration effect. When the porosity is within the above range, the effect of the active material layer absorbing the electrolyte is the best. In a case of a too high porosity, the active material layer has an unstable structure and is likely to fall off during cycling. In a case of a too low porosity, the electrolyte absorption rate is small, which is likely to cause poor electrolyte infiltration, accelerating capacity degradation of the electrochemical apparatus during charge and discharge.

According to some embodiments of this application, the functional layer includes a polymer formed by at least one of acrylic monomers, acrylate monomers, or styrene monomers.

According to some embodiments of this application, based on a mass of the functional layer, a mass percentage of the polymer is 30% to 100%.

According to some embodiments of this application, the functional layer further includes inorganic particles. The inorganic particles in the functional layer can prevent the failure caused by internal short circuit occurring when the electrochemical apparatus is pierced by external force, thereby effectively improving the safety performance of the electrochemical apparatus in piercing test.

According to some embodiments of this application, the inorganic particles include at least one of boehmite, empholite, aluminum oxide, barium sulfate, calcium sulfate, or calcium silicate.

According to some embodiments of this application, an electrolyte retention rate of the functional layer is 40% to 120%.

According to some embodiments of this application, a nondestructive ultrasonic intelligent diagnostic system test is performed, where along a thickness direction of the electrochemical apparatus, an ultrasound is emitted to the electrochemical apparatus, to obtain a signal feedback distribution diagram of the electrochemical apparatus for the ultrasound. Based on an area of the electrochemical apparatus in the signal feedback distribution diagram, an area percentage of a region with an ultrasound signal intensity greater than or equal to 1333 mV is 30% to 95%. Ultrasound is a mechanical wave that requires a medium to propagate. When there is no electrolyte infiltration between the electrode materials, the ultrasound can propagate only through direct contact between the electrode material particles. Irregular particles cause a large amount of reflection and refraction of the ultrasound, resulting in severe attenuation of the signal intensity. However, when the electrolyte can fully infiltrate the electrode materials, a liquid environment provides a good propagation path for the ultrasound, such that a significant portion of the ultrasound is not interfered with by the particles, thereby ensuring the signal intensity. Therefore, in the nondestructive ultrasonic intelligent diagnostic system test, the signal feedback strength of the electrochemical apparatus to the ultrasound at various positions can well characterize the distribution and infiltration of the electrolyte in the electrochemical apparatus. The higher the area percentage of regions with high signal intensity, the more uniform the distribution of the electrolyte in the electrochemical apparatus.

According to some embodiments of this application, the electrochemical apparatus has flatness of 0 mm to 0.5 mm.

According to some embodiments of this application, the electrode assembly is a wound electrode assembly, a winding start end and terminal end of the current collector are provided with the second region, and the functional layer is disposed in the second region of the terminal end.

According to a second aspect, this application provides an electronic apparatus, including the electrochemical apparatus according to the first aspect.

In this application, applying the functional layer to the current collector region of the electrode plate uncoated with an active material, with the volume ratio of the functional layer to the active material layer controlled in the range of 1% to 10%, can increase the electrolyte retention amount of the electrochemical apparatus, improving the cycling performance. Such application can also prevent an unsmooth surface of the electrochemical apparatus caused by uneven movement of the surplus electrolyte in the packaging bag (for example, an aluminum plastic film), thus improving the appearance flatness of the electrochemical apparatus, reducing the energy density loss.

### BRIEF DESCRIPTION OF DRAWINGS

FIG. 1 is a schematic diagram of an electrode plate in an electrochemical apparatus according to some embodiments of this application, where 1-current collector; 2-active material layer; and 3-functional layer.
FIG. 2 is a schematic diagram of a wound electrode assembly in an electrochemical apparatus according to some embodiments of this application, where 1-current collector; 2-active material layer; 3-functional layer; 4-winding terminal end; and 5-winding start end, the functional layer being disposed at the winding terminal end of the current collector.

### DETAILED DESCRIPTION

The following further describes this application with reference to specific embodiments. It should be understood that these specific embodiments are merely intended to describe this application instead of limiting the scope of this application.

### I. Electrochemical apparatus

This application provides an electrochemical apparatus, including an electrode assembly. The electrode assembly includes an electrode plate, the electrode plate includes a current collector, and the current collector includes a first region and a second region. An active material layer is disposed in the first region, a functional layer is disposed in the second region, and a volume ratio of the functional layer to the active material layer is R, where 1%≤R≤10%. The inventors of this application have found that applying a functional layer capable of absorbing the electrolyte to a current collector region of the electrode plate uncoated with an active material, with the volume ratio of the functional layer to the active material layer controlled within the aforementioned range, can increase the electrolyte retention amount of the electrochemical apparatus, improving the cycling performance. Such application can also prevent an unsmooth surface of the electrochemical apparatus caused by uneven movement of the surplus electrolyte in the packaging bag (for example, an aluminum plastic film), thus improving the appearance flatness of the electrochemical apparatus, reducing the energy density loss. In some embodiments, the functional layer can absorb the electrolyte.

In this application, the "second region" may refer to a blank region on the current collector without the active material layer.

According to some embodiments of this application, R is 1%, 1.5%, 2%, 2.5%, 3%, 3.5%, 4%, 4.5%, 5%, 5.5%, 6%, 6.5%, 7%, 7.5%, 8%, 8.5%, 9%, 9.5%, or in a range defined by any two of these values. When R is too large, the percentage of the functional layer is too large, reducing the energy density of the electrochemical apparatus. When R is too small, the electrolyte retention rate of the functional layer is relatively low, which is not conducive to improving the cycling performance and appearance of the electrochemical apparatus.

According to some embodiments of this application, the electrochemical apparatus satisfies R≥k/(D×P), where D represents a swelling degree of the functional layer, P represents a porosity of the active material layer, and 0.004≤k≤0.008. In some embodiments, k is 0.0045, 0.005, 0.0055, 0.006, 0.0065, 0.007, 0.0075, or any value between them. The swelling degree of the functional layer and the porosity of the active material layer both affect the absorption of the electrolyte. Generally, the higher the swelling degree and the larger the porosity, the easier it is to absorb more electrolyte, increasing the electrolyte retention amount of the electrochemical apparatus. However, a too high swelling degree and a too large porosity decrease the structural stability of the functional layer and the active material layer and reduce the volumetric energy density of the electrochemical apparatus. In this application, it has been found through extensive research that when the volume percentage and the swelling degree of the functional layer, and the porosity of the active material layer meet the aforementioned relation, the electrochemical apparatus possesses both excellent cycling performance and low energy density loss.

According to some embodiments of this application, the swelling degree of the functional layer is D, and 200%≤D≤800%. In some embodiments, the swelling degree of the functional layer is 220%, 250%, 270%, 320%, 350%, 370%, 390%, 400%, 420%, 450%, 470%, 500%, 520%, 540%, 570%, 600%, 620%, 650%, 670%, 700%, 720%, 750%, 770%, or in a range defined by any two of these values. When the swelling degree of the functional layer is less than 200%, the electrolyte retention rate of the functional layer is low, which is not conducive to improving the appearance of the electrochemical apparatus. When the swelling degree of the functional layer is greater than 800%, the functional layer itself has poor stability and is likely to fall off during cycling, thus affecting the improvement effect for appearance and the subsequent cycling electrical performance. In some embodiments, the swelling degree of the functional layer is 300% to 600%.

According to some embodiments of this application, the porosity of the active material layer is P, and 5%≤P≤25%. In some embodiments, P is 6%, 7%, 8%, 9%, 10%, 11%, 12%, 13%, 14%, 15%, 16%, 17%, 18%, 19%, 20%, 21%, 22%, 23%, 24%, or in a range defined by any two of these values. The porosity of the active material layer determines the electrolyte infiltration effect. When the porosity is within the above range, the effect of the active material layer absorbing the electrolyte is the best. In a case of a too high porosity, the active material layer has an unstable structure and is likely to fall off during cycling. In a case of a too low porosity, the electrolyte absorption rate is small, which is likely to cause poor electrolyte infiltration, accelerating capacity degradation of the electrochemical apparatus during charge and discharge.

According to some embodiments of this application, the functional layer includes a polymer formed by at least one of acrylic monomers, acrylate monomers, or styrene monomers.

In some embodiments, the acrylic monomers include at least one of the compounds represented by Formula I, 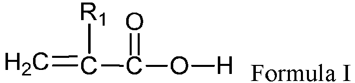 where R₁ is selected from hydrogen, C₁-C₁₀ alkyl, or halogen-substituted C₁-C₁₀ alkyl. According to some embodiments of this application, R₁ is selected from C₁-C₆ alkyl or halogen-substituted C₁-C₆ alkyl. In some embodiments of this application, R₁ is selected from methyl, ethyl, fluoroethyl, propyl, fluoropropyl, butyl, fluorobutyl, pentyl, or fluoropentyl.

In some embodiments, the acrylic monomer includes at least one of acrylic acid, methacrylic acid, or ethyl acrylic acid.

In some embodiments, the acrylate monomers include at least one of the compounds represented by Formula II, 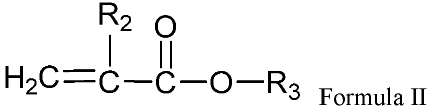 where R₂ is selected from hydrogen, C₁-C₁₀ alkyl, or halogen-substituted C₁-C₁₀ alkyl; R₃ is selected from C₁-C₁₀ alkyl, or halogen-substituted C₁-C₁₀ alkyl. According to some embodiments of this application, R₂ is selected from hydrogen, C₁-C₆ alkyl, or halogen-substituted C₁-C₆ alkyl; R₃ is selected from C₁-C₆ alkyl or halogen-substituted C₁-C₆ alkyl. In some embodiments of this application, R₂ is selected from hydrogen, methyl, ethyl, or propyl; R₃ is selected from methyl, ethyl, fluoroethyl, propyl, fluoropropyl, butyl, fluorobutyl, pentyl, or fluoropentyl.

**In** some embodiments, the acrylate monomer includes at least one of methyl acrylate, methyl methacrylate, methyl ethyl acrylate, ethyl acrylate, ethyl methacrylate, ethyl ethacrylate, propyl acrylate, propyl methacrylate, ethyl propyl acrylate, butyl acrylate, butyl methacrylate, ethyl butyl acrylate, pentyl methacrylate, or amyl acrylate.

According to some embodiments of this application, the styrene monomers include at least one of the compounds represented by Formula III, 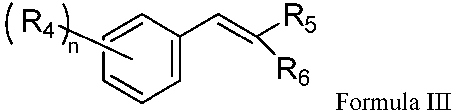 where n is an integer from 1 to 5, such as 2, 3, or 4; each R₄ is the same or different, independently selected from hydrogen, C₁-C₁₀ alkyl, or halogen-substituted C₁-C₁₀ alkyl; R₅ and R₆ are the same or different, independently selected from hydrogen, C₁-C₁₀ alkyl or halogen-substituted C₁-C₁₀ alkyl. According to some embodiments of this application, R₄ is selected from hydrogen, C₁-C₆ alkyl, or halogen-substituted C₁-C₆ alkyl; and R₅ and R₆ are the same or different, independently selected from C₁-C₁₆ alkyl or halogen-substituted C₁-C₆ alkyl. In some embodiments of this application, R₄, R₅, and R₆ are independently selected from hydrogen, methyl, ethyl, or propyl.

In some embodiments, the styrene monomers include at least one of styrene, methyl styrene, 2-methyl styrene, or 2,4-dimethyl styrene.

According to some embodiments of this application, the raw material forming the polymer includes at least one of pure acrylic emulsion, styrene-acrylic emulsion, or acrylate emulsion. In some embodiments, the polymer includes at least one of pure acrylic emulsion, styrene-acrylic emulsion, or acrylate emulsion.

According to some embodiments of this application, the raw material forming the polymer includes pure acrylic emulsion and styrene-acrylic emulsion. In some embodiments, based on the total mass of the pure acrylic emulsion and styrene-acrylic emulsion, a mass percentage of the pure acrylic emulsion is 50% to 90%, and a mass percentage of the styrene-acrylic emulsion is 10% to 50%.

According to some embodiments of this application, based on the mass of the functional layer, a percentage of the polymer is 30% to 100%, such as 30%, 35%, 40%, 45%, 50%, 55%, 60%, 65%, 70%, 75%, 80%, 85%, 90%, 95%, or in a range defined by any two of these values.

According to some embodiments of this application, the functional layer further includes inorganic particles. The inorganic particles in the functional layer can prevent the failure caused by internal short circuit occurring when the electrochemical apparatus is pierced by external force, thereby effectively improving the safety performance of the electrochemical apparatus in piercing test.

According to some embodiments of this application, the inorganic particles include at least one of boehmite, empholite, aluminum oxide, barium sulfate, calcium sulfate, or calcium silicate.

According to some embodiments of this application, an electrolyte retention rate of the functional layer is 40% to 120%. In some embodiments, the electrolyte retention rate of the functional layer is 45%, 50%, 55%, 60%, 65%, 70%, 75%, 80%, 85%, 90%, 95%, 100%, 105%, 110%, 115%, or in a range defined by any two of these values. In a case that the appearance of the electrochemical apparatus meets the shipping requirement, increasing the electrolyte retention rate is conducive to improving the cycling stability of the electrochemical apparatus in the later stage.

According to some embodiments of this application, a nondestructive ultrasonic intelligent diagnostic system test is performed, where along a thickness direction of the electrochemical apparatus, an ultrasound is emitted to the electrochemical apparatus, to obtain a signal feedback distribution diagram of the electrochemical apparatus for the ultrasound. Based on an area of the electrochemical apparatus in the signal feedback distribution diagram, an area percentage of a region with an ultrasound signal intensity greater than or equal to 1333 mV is 30% to 95%. Ultrasound is a mechanical wave that requires a medium to propagate. When there is no electrolyte infiltration between the electrode materials, the ultrasound can propagate only through direct contact between the electrode material particles. Irregular particles cause a large amount of reflection and refraction of the ultrasound, resulting in severe attenuation of the signal intensity. However, when the electrolyte can fully infiltrate the electrode materials, a liquid environment provides a good propagation path for the ultrasound, such that a significant portion of the ultrasound is not interfered with by the particles, thereby ensuring the signal intensity. Therefore, in the nondestructive ultrasonic intelligent diagnostic system test, the signal feedback strength of the electrochemical apparatus to the ultrasound at various positions can well characterize the distribution and infiltration of the electrolyte in the electrochemical apparatus. The higher the area percentage of regions with high signal intensity, the more uniform the distribution of the electrolyte in the electrochemical apparatus.

According to some embodiments of this application, the area percentage of the region with a signal intensity greater than or equal to 1333 mV is 35%, 38%, 40%, 45%, 47%, 50%, 53%, 55%, 57%, 60%, 63%, 65%, 67%, 70%, 73%, 75%, 77%, 80%, 83%, 85%, 87%, 90%, 92%, 94%, or in a range defined by any two of these values. In some embodiments, the area percentage of the region with a signal intensity greater than or equal to 1333 mV is 50% to 95%.

According to some embodiments of this application, the electrochemical apparatus has flatness of 0 mm to 0.5 mm.

According to some embodiments of this application, the electrode assembly is a wound electrode assembly, a winding start end and terminal end of the current collector are provided with the second region, and the functional layer is disposed in the second region of the terminal end.

According to some embodiments of this application, the active material layer is a positive electrode active material layer and/or a negative electrode active material layer.

According to some embodiments of this application, the positive electrode active material layer includes a positive electrode active material, a binder, and a conductive agent. In some embodiments, the positive electrode active material may include at least one of lithium cobalt oxide, lithium nickel manganese cobalt oxide, lithium nickel manganese aluminate, lithium iron phosphate, lithium vanadium phosphate, lithium cobalt phosphate, lithium manganese phosphate, lithium iron manganese phosphate, lithium iron silicate, lithium vanadium silicate, lithium cobalt silicate, lithium manganese silicate, spinel lithium manganate, spinel lithium nickel manganate, or lithium titanate. In some embodiments, the binder may include various binder polymers, for example, at least one of polyvinylidene fluoride, polytetrafluoroethylene, polyolefin, carboxymethyl cellulose sodium, carboxymethyl cellulose lithium, modified polyvinylidene fluoride, modified SBR rubber, or polyurethane. In some embodiments, any conductive material can be used as the conductive agent as long as it does not cause chemical changes. For example, the conductive agent includes: a carbon-based material such as natural graphite, artificial graphite, carbon black, acetylene black, Ketjen black, and carbon fiber; a metal-based material such as metal powder or metal fiber including copper, nickel, aluminum, silver; a conductive polymer such as a polyphenylene derivative; or any mixture thereof.

According to some embodiments of this application, the negative electrode active material layer includes a negative electrode active material, a binder, and a conductive agent. In some embodiments, the negative electrode active material may include a material that reversibly intercalates/deintercalates lithium ions, lithium metal, lithium metal alloy, or transition metal oxide. In some embodiments, the negative electrode active material includes at least one of carbon material or silicon material, where the carbon material includes at least one of graphite and hard carbon, and the silicon material includes at least one of silicon, silicon oxide, silicon carbide, or silicon alloy. In some embodiments, the binder includes at least one of styrene-butadiene rubber, polyacrylic acid, polyacrylate, polyimide, polyamide-imide, polyvinylidene fluoride, polyvinyl fluoride, polytetrafluoroethylene, water-based acrylic resin, polyvinyl formal, or styrene-acrylic copolymer resin. In some embodiments, any conductive material can be used as the conductive material as long as it does not cause chemical changes. In some embodiments, the conductive material includes at least one of conductive carbon black, acetylene black, carbon nanotubes, ketjen black, conductive graphite, or graphene.

According to some embodiments of this application, the current collector is a positive electrode current collector and/or a negative electrode current collector. In some embodiments, the positive electrode current collector may be a metal foil current collector or a composite current collector. For example, an aluminum foil may be used. The composite current collector may be formed by depositing a metal material (copper, copper alloy, nickel, nickel alloy, titanium, titanium alloy, silver, silver alloy, or the like) on a polymer matrix. In some embodiments, the negative electrode current collector may be copper foil, nickel foil, stainless steel foil, titanium foil, nickel foam, copper foam, a polymer substrate coated with a conductive metal, or a combination thereof.

The electrode assembly of this application further includes a separator. A material or shape of the separator used in the electrode assembly of this application is not particularly limited, and may be based on any technology disclosed in the prior art. In some embodiments, the separator includes a polymer, an inorganic substance, or the like formed by a material stable to the electrolyte of this application. For example, the separator may include a substrate layer and a surface treatment layer. The substrate layer is a non-woven fabric, film, or composite film having a porous structure, and the substrate layer is made of a material selected from at least one of polyethylene, polypropylene, polyethylene terephthalate, or polyimide. Specifically, the substrate layer may be a polypropylene porous film, a polyethylene porous film, a polypropylene non-woven fabric, a polyethylene non-woven fabric, or a polypropylene-polyethylene-polypropylene porous composite film.

The surface treatment layer is disposed on at least one surface of the substrate layer, and the surface treatment layer may be a polymer layer, an inorganic substance layer, or a layer formed by mixing a polymer and an inorganic substance.

The inorganic substance layer includes inorganic particles and a binder. The inorganic particles are selected from at least one of aluminum oxide, silicon oxide, magnesium oxide, titanium oxide, hafnium oxide, tin oxide, ceria oxide, nickel oxide, zinc oxide, calcium oxide, zirconium oxide, yttrium oxide, silicon carbide, boehmite, aluminum hydroxide, magnesium hydroxide, calcium hydroxide, or barium sulfate. The binder is selected from at least one of polyvinylidene fluoride, vinylidene fluoride-hexafluoropropylene copolymer, polyamide, polyacrylonitrile, polyacrylate, polyacrylic acid, polyacrylate, polyvinylpyrrolidone, polyvinyl ether, polymethyl methacrylate, polytetrafluoroethylene, or polyhexafluoropropylene.

The polymer layer includes a polymer, and a material of the polymer is selected from at least one of polyamide, polyacrylonitrile, acrylate polymer, polyacrylic acid, polyacrylate, polyvinylpyrrolidone, polyvinyl ether, polyvinylidene fluoride, and poly(vinylidene fluoride-hexafluoropropylene).

The electrochemical apparatus in this application further includes an electrolyte. The electrolyte that can be used in this application may be an electrolyte known in the prior art.

In some embodiments, the electrolyte includes an organic solvent, a lithium salt, and an optional additive. The organic solvent of the electrolyte according to this application may be any organic solvent known in the prior art which can be used as a solvent of the electrolyte. The electrolytic salt used in the electrolyte according to this application is not limited, and may be any electrolytic salt known in the prior art. The additive of the electrolyte according to this application may be any additive known in the prior art that can be used as an additive of the electrolyte. In some embodiments, the organic solvent includes but is not limited to ethylene carbonate (EC), propylene carbonate (PC), diethyl carbonate (DEC), ethyl methyl carbonate (EMC), dimethyl carbonate (DMC), propylene carbonate, or ethyl propionate. In some embodiments, the organic solvent includes an ether solvent, for example, at least one of 1,3-dioxolane (DOL) or dimethoxyethane (DME). In some embodiments, the lithium salt includes at least one of an organic lithium salt or an inorganic lithium salt. In some embodiments, the lithium salt includes, but is not limited to: lithium hexafluorophosphate (LiPF₆), lithium tetrafluoroborate (LiBF₄), lithium difluorophosphate (LiPO₂F₂), lithium bistrifluoromethanesulfonimide LiN(CF₃SO₂)₂(LiTFSI), lithium bis(fluorosulfonyl)imide Li(N(SO₂F)₂)(LiFSI), lithium bis(oxalate) borate LiB(C₂O₄)₂(LiBOB), or lithium difluoro(oxalato)borate LiBF₂(C₂O₄)(LiDFOB).

In some embodiments, the electrochemical apparatus of this application includes, but is not limited to: all types of primary batteries, secondary batteries, or capacitors. In some embodiments, the electrochemical apparatus is a lithium secondary battery. In some embodiments, the lithium secondary battery includes, but is not limited to a lithium metal secondary battery, a lithium-ion secondary battery, a sodium-ion secondary battery, a lithium polymer secondary battery, or a lithium-ion polymer secondary battery.

### II. Electronic apparatus

This application further provides an electronic apparatus, including the electrochemical apparatus according to the first aspect of this application.

The electronic device or apparatus of this application is not particularly limited. In some embodiments, the electronic device may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a motor bicycle, a bicycle, a lighting appliance, a toy, a game console, a timepiece, an electric tool, a flash lamp, a camera, a large household battery, and a capacitor.

In the following embodiments and comparative examples, all reagents, materials, and instruments used are commercially available unless otherwise specified.

### Examples and comparative examples

Preparation of functional layer slurry: A binder (specific compositions are shown in the table below), optional inorganic particles (specific compositions are shown in the table below), and a solvent were mixed to uniformity, to obtain a slurry. The slurry was controlled with a viscosity of 200-3000 mPa·S and solid content of 35%-50%. The solvent was chosen based on the type of binder. When the binder was water-based, a water-based solvent (for example, deionized water) could be used; when the binder was oil-based, an oil-based solvent (for example, N-methylpyrrolidone) could be used.

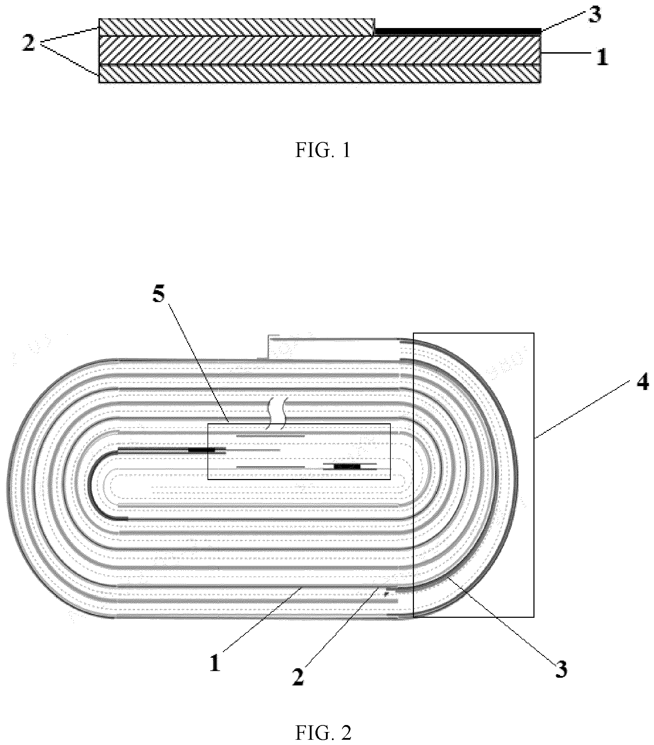

Preparation of electrode plate: The slurry prepared above was applied to a target region of a current collector (as shown in FIG. 2, the winding terminal end of the current collector), and the solvent was dried to obtain an electrode plate coated with a functional layer. The slurry containing an active material was applied to a region uncoated with the functional layer, dried, and rolled to obtain an electrode plate.

The slurry containing the active material was either a positive electrode active material slurry or a negative electrode active material slurry. Specifically, the positive electrode active material slurry was prepared by mixing lithium cobalt oxide, conductive carbon, and polyvinylidene fluoride in a mass ratio of 96:2:2, and adding N-methyl-2-pyrrolidone (NMP). The negative electrode active material slurry was prepared by mixing graphite, styrene-butadiene rubber, and carboxymethyl cellulose sodium in a mass ratio of 98:1:1, and adding deionized water.

Preparation of secondary battery: A positive electrode, a separator (PE porous polymer film), and a negative electrode were stacked sequentially, with the separator sandwiched between the positive electrode and the negative electrode for isolation, and then wound to obtain an electrode assembly. The electrode assembly was placed in an outer package aluminum plastic film into which an electrolyte (the solvent was a solution with EC and DMC in a volume ratio of 1:1 and LiPF₆ of a mass concentration of 12.5% based on the mass of the electrolyte) was then injected, followed by processes such as vacuum sealing, standing, formation, and shaping, thus completing the preparation of the secondary battery.

### Test methods:

### 1. Volume ratio of functional layer to active material layer

Under an environment of (25±3)°C, the electrode plate coated with the functional layer was removed from the secondary battery. It was placed in an 85°C oven for drying. A soft ruler was used to measure the width a and length b of the active material layer, and the width A and length B of the functional layer. The thickness h of the active material layer and the thickness H of the functional layer were measured using a CCD detector. The volume ratio R of the functional layer to the active material layer was (A×B×H)/(a×b×h)×100%.

### 2. Porosity of active material layer

The porosity of the active material layer was tested using a mercury porosimeter (model V9600). The specific test steps were as follows:
a. The positive electrode plate and the negative electrode plate were punched into circular pieces of 15.4025 cm². If no conditions allowed for circular piece punching, the plates were cut into rectangles of 4.0 cm×3.2 cm using a blade. The area was recorded, the thickness was measured with a micrometer, the weight was measured with an analytical balance, and the data was entered into a test record sheet.
b. The positive electrode plate and the negative electrode plate were cut into slightly smaller pieces and wound with a cotton swab into a sample tube for testing. The tightened sample tube was placed in "station1" on the right side of a low-pressure station, and then fitted with a metal sleeve and an electrode.
c. A low-pressure interface was entered, Operations on a software toolbar was clicked, Low Pressure Analysis was selected from a drop-down menu, Station1 (or Station2) was chosen, OK was clicked, and the low-pressure operation interface was entered. In the low-pressure operation interface, sample information was entered, sample specification, capacitance constant, and vacuuming program were set, Run Mode was clicked to select Evacuate and fill only mode, and then OK was clicked. After the information was verified correct, Start was clicked to begin low-pressure mercury filling.
d. After the low-pressure mercury filling was completed, the electrode and metal sleeve were removed, and the sample tube was taken out of the low-pressure station, to check whether the mercury has bubbles and the sample tube was fully filled.
e. A metal protective sleeve was fitted onto the sample tube and slowly placed into a high-pressure chamber. Operations on the software toolbar was clicked, High Pressure Analysis was selected from the drop-down menu, a high-pressure operation interface was entered, and sample information such as Sample Id, Comments, and Sample Weight was input. Other parameters were set according to the common parameter setting table. Related parameters were set in the Run Mode interface, OK was clicked, the information parameters were verified to be correct, and Start was clicked to begin. The file was automatically saved when the analysis was completed. Raw data was edited: The mouse was right-clicked to choose select all, and then right-clicked again to choose copy, so as to copy the results into an EXCEL table. The "NPDDrawPlot" macro was used to create a pore size distribution diagram and a porosity diagram, with a compaction density set to the actual measured value.

### 3. Ultrasonic test

A nondestructive ultrasonic intelligent diagnostic device (model: UBSC-LD) was used to emit an ultrasound (50 MHZ, 400 mV) to the secondary battery along the thickness direction of the secondary battery, to obtain a signal feedback distribution diagram of the battery for the ultrasound. Integration software, such as JMP software, was used to calculate the total area S of the battery test in the signal feedback distribution diagram, and the area S1 of a region with a signal intensity ≥1333 mV. The percentage of the region with a signal intensity ≥1333 mV was calculated as S1/S×100%.

### 4. Electrolyte retention rate

(a) Under an environment of (25±3)°C, the electrode plate coated with the functional layer was removed from the secondary battery. If there was another coating on the other side of the current collector coated with the functional layer, it was removed through a physical or chemical method without damaging the functional layer. Then the current collector coated with the functional layer was cut using a cutting machine.
(b) The cut current collector coated with the functional layer (including the current collector) was weighed at least 3 times using an electronic balance, with the weight values respectively denoted as m1; m2; m3 ..., to obtain an average value m.
(c) The weighed current collector coated with the functional layer (including the current collector) was placed in an 85°C oven, baked for 30 min to 60 min to ensure that the electrolyte in the functional layer was completely dried, and then weighed again at least 3 times, with the weight values respectively denoted as M1; M2; M3; ... to obtain an average value M.
(d) The functional layer was removed using a physical or chemical method without damaging the corresponding current collector, and the corresponding current collector was weighed at least 3 times, with the weight values respectively denoted as G1; G2; G3; ..., to obtain an average value G.
(e) The electrolyte retention rate of the functional layer was recorded as: R=(m-M)/(M-G)×100%.

### 5. Swelling degree

(a) Preparation of gel film: Under an environment of (25±3)°C, the electrode plate coated with the functional layer was removed from the secondary battery. If there was another coating on the other side of the current collector coated with the functional layer, it was removed through a physical or chemical method without damaging the functional layer. Then the current collector coated with the functional layer was cut using a cutting machine, soaked in dimethyl carbonate DMC to remove the electrolyte dissolved in the functional layer, taken out for drying, and then placed in water to dissolve the functional layer to form a solution. The solution was poured into a gel film preparation mold, and any bubbles were lifted and removed. The mold was placed in a 60°C oven for 12 h, and the appearance and hardness of the gel film were observed after baking. If the gel film was not completely dried, baking continued until fully drying.
(b) The prepared gel film was cut into small strips with scissors.
(c) The small gel film strip was weighed, with the initial weight recorded as a, and placed in a small bottle. An electrolyte (with a solvent being a solution containing EC and DMC in a volume ratio of 1:1 and LiPF₆ of a mass concentration of 12.5% based on the mass of the electrolyte) was then added therein to cover the gel film by 2 cm-3 cm. The small bottle was sealed and placed in a vacuum drying oven at 85°C for 6 h.
(d) A swelling degree of the gel film was tested: The gel film was taken out and wiped clean with dust-free paper, with the weight b recorded.

Swelling degree=(b-a)/a×100%. Three parallel samples were made, and the arithmetic average of the obtained swelling degrees was calculated to obtain the swelling degree of the functional layer.

### 6. Flatness

The flatness of the secondary battery was tested using a laser scanning method. Specifically, an optical device was used to scan the entire contour of the secondary battery to create a 3D model. The difference between the overall thickness and the cross-sectional thickness was noted as P and calculated, representing the flatness of the secondary battery. If P≤0.5 mm, the flatness of the secondary battery was considered OK and met the requirement; if P>0.5mm, the flatness was considered NG and failed to meet the requirement.

### 7. Nail penetration test pass rate

The secondary battery under test was charged to a full-charge voltage at a constant current of 0.05 C, and then charged to a current of 0.025C (cut-off current) at a full-charge voltage to make the secondary battery enter a fully charged state. The appearance of the secondary battery before the test was recorded. Under an environment of 25±3°C, the nail penetration test was conducted on the battery. A steel nail with a diameter of 4 mm was used at a penetration speed of 30 mm/s at the geometric center of the secondary battery. The test was conducted for 3.5 min or ended when the surface temperature of the electrode assembly dropped to 50°C. With 10 secondary batteries in a set, the state of the secondary batteries was observed during the test according to criteria of no burning and no explosion of the secondary batteries.

### 8. Cycling capacity retention rate at 25°C/45°C

The cycling performance was tested using Land CT2001A under an environment of 25°C/45°C (±3°C). The secondary battery was first charged at a constant current density of 0.2C to 4.45 V, charged at a constant voltage of 4.45 V until the current was less than 50 µA, and discharged at a constant current density of 0.2C to 3.0 V. The discharge capacity of the first cycle was recorded as the initial capacity C0. The above charge-discharge cycle was repeated 500 cycles, the discharge capacity of the 500th cycle was recorded as C500, and the cycle capacity retention rate of the 200th cycle was calculated as C500/C0×100%.

### Test result

**Table 1**

| Example and comparative example | Functional layer | | | Secondary battery | | | | | |
|---|---|---|---|---|---|---|---|---|---|
| | Volume ratio of functional layer to active material layer R | k | k/(D×P) | Electrolyte retention rate (%) | Cycling capacity retention rate at 25°C (after 500 cycles) (%) | Cycling capacity retention rate at 45°C (after 500 cycles) (%) | Nail penetration pass rate (%) | Area percentage of region with wavenumber greater than 1333 mV (%) | Flatness |
| 1-1 | 1% | 0.008 | 0.0097 | 60 | 95.0 | 90.0 | 20 | 50% | 0.4 |
| 1-2 | 2% | 0.008 | 0.0097 | 75 | 95.5 | 90.5 | 30 | 60% | 0.3 |
| 1-3 | 4% | 0.008 | 0.0097 | 90 | 95.6 | 90.6 | 35 | 75% | 0.2 |
| 1-4 | 6% | 0.008 | 0.0097 | 92 | 96.0 | 90.7 | 40 | 80% | 0.17 |
| 1-5 | 8% | 0.008 | 0.0097 | 95 | 96.6 | 90.8 | 40 | 85% | 0.14 |
| 1-6 | 10% | 0.008 | 0.0097 | 90 | 96.0 | 90.0 | 40 | 90% | 0.15 |
| Comparative example 1-1 | Without functional layer | | | 0 | 90.0 | 86.0 | 0 | 5% | 0.53 |

| | | | | | | | | | |
|---|---|---|---|---|---|---|---|---|---|
| Note: In the examples in Table 1, in the slurry forming the functional layer, the binder is pure acrylic emulsion and inorganic particles are boehmite, where a mass ratio of the pure acrylic emulsion to boehmite is 34:3, the swelling degree D of the functional layer is 550%, and the porosity P of the active material layer is 15%. | | | | | | | | | |

From the data in Table 1, it can be seen that within a certain range, the larger the volume ratio R of the functional layer to the active material layer, the higher the electrolyte retention rate of the functional layer, increasing capacity retention rate and improving safety performance and the appearance flatness.

**Table 2**

| Example | Functional layer | | | | Secondary battery | | | | | |
|---|---|---|---|---|---|---|---|---|---|---|
| | Volume ratio of functional layer to active material layer R | Binder composition | Swelling degree D | k/(D×P) | Electrolyte retention rate (%) | Cycling capacity retention rate at 25°C (after 500 cycles) (%) | Cycling capacity retention rate at 45°C (after 500 cycles) (%) | Nail penetration pass rate (%) | Area percentage of region with wavenumber greater than 1333 mV (%) | Flatness |
| 2-1 | 8% | Styrene-acrylic emulsion (100%) | 230% | 0.0232 | 60 | 95.0 | 90.0 | 40 | 30 | 0.45 |
| 2-2 | 8% | Pure acrylic emulsion (50%)+styrene-acrylic emulsion (50%) | 400% | 0.0133 | 74 | 95.5 | 90.5 | 40 | 40 | 0.4 |
| 2-3 | 8% | Pure acrylic emulsion (60%)+styrene-acrylic emulsion (40%) | 450% | 0.0119 | 80 | 95.6 | 90.6 | 40 | 45 | 0.33 |
| 2-4 | 8% | Pure acrylic emulsion (70%)+styrene-acrylic emulsion (30%) | 500% | 0.0107 | 86 | 97.0 | 90.7 | 40 | 50 | 0.3 |
| 2-5 | 8% | Pure acrylic emulsion (80%)+styrene-acrylic emulsion (20%) | 510% | 0.0105 | 90 | 96.0 | 90.8 | 40 | 60 | 0.25 |
| 2-6 | 8% | Pure acrylic emulsion (90%)+styrene-acrylic emulsion (10%) | 530% | 0.0101 | 93 | 96.8 | 91.0 | 40 | 70 | 0.2 |
| 2-7 | 8% | Pure acrylic emulsion (100%) | 550% | 0.0097 | 95 | 97 | 92 | 40 | 85 | 0.14 |

| | | | | | | | | | | |
|---|---|---|---|---|---|---|---|---|---|---|
| Note: In the examples in Table 2, the percentage of each component of the binder is the mass percentage in the slurry forming the functional layer, and the inorganic particles are boehmite, where a mass ratio of the binder to boehmite is 34:3, k is 0.008, and the porosity P of the active material layer is 15%. | | | | | | | | | | |

From the data in Table 2, it can be seen that the composition of the binder directly affects its swelling degree, thereby influencing the electrolyte retention rate and the percentage of the region with a wavenumber greater than or equal to 1333 mV. In a case of ensuring a stable functional layer, a larger swelling degree results in a larger electrolyte retention rate and a larger percentage of the region with a wavenumber greater than or equal to 1333 mV, leading to a better battery capacity retention rate.

**Table 3**

| Example and comparative example | Functional layer | | | Secondary battery | | | | | |
|---|---|---|---|---|---|---|---|---|---|
| | Volume ratio of functional layer to active material layer R | Porosity of active material layer P | k/(D×P) | Electrolyte retention rate (%) | Cycling capacity retention rate at 25°C (after 500 cycles) (%) | Cycling capacity retention rate at 45°C (after 500 cycles) (%) | Nail penetration pass rate (%) | Area percentage of region with wavenumber greater than 1333 mV (%) | Flatness |
| 3-1 | 8% | 4% | 0.0364 | 89 | 95.5 | 90.5 | 40 | 50 | 0.5 |
| 3-2 | 8% | 6% | 0.0242 | 86 | 95.6 | 90.6 | 40 | 60 | 0.46 |
| 3-3 | 8% | 8% | 0.0182 | 84 | 97.0 | 90.7 | 40 | 70 | 0.3 |
| 3-4 | 8% | 10% | 0.0145 | 83 | 96.0 | 90.8 | 40 | 80 | 0.23 |
| 3-5 | 8% | 13% | 0.0112 | 85 | 96.8 | 91.0 | 40 | 83 | 0.2 |
| 3-6 | 8% | 15% | 0.0097 | 95 | 97 | 92 | 40 | 85 | 0.14 |
| 3-7 | 8% | 18% | 0.0081 | 95 | 96.0 | 92 | 40 | 90 | 0.14 |

| | | | | | | | | | |
|---|---|---|---|---|---|---|---|---|---|
| Note: In the examples in Table 3, in the slurry forming the functional layer, the binder is pure acrylic emulsion and inorganic particles are boehmite, where a mass ratio of the pure acrylic emulsion to boehmite is 34:3, the swelling degree D of the functional layer is 550%, and k is 0.008. | | | | | | | | | |

From the data in Table 3, it can be seen that the porosity of the active material layer affects the performance of the functional layer within the secondary battery. Within a certain range (4%-18%) of the porosity, as P increases, electrolyte infiltration improves, cycle retention rate increases, and flatness improves.

**Table 4**

| Example and comparative example | Functional layer | | | Secondary battery | | | | | |
|---|---|---|---|---|---|---|---|---|---|
| | Volume ratio of functional layer to active material layer R | Inorganic particle | k/(D×P) | Electrolyte retention rate (%) | Cycling capacity retention rate at 25°C (after 500 cycles) (%) | Cycling capacity retention rate at 45°C (after 500 cycles) (%) | Nail penetration pass rate (%) | Area percentage of region with wavenumber greater than 1333 mV (%) | Flatness |
| 4-1 | 8% | Boehmite | 0.0097 | 95 | 97 | 92 | 40 | 85 | 0.14 |
| 4-2 | 8% | Empholite | 0.0097 | 95 | 96 | 90 | 30 | 85 | 0.14 |
| 4-3 | 8% | Aluminum oxide | 0.0097 | 95 | 95 | 90.50 | 25 | 85 | 0.14 |
| 4-4 | 8% | Barium sulfate | 0.0097 | 95 | 95 | 90.60 | 25 | 85 | 0.14 |
| 4-5 | 8% | Calcium sulfate | 0.0097 | 95 | 95 | 90.70 | 25 | 85 | 0.14 |
| 4-6 | 8% | Calcium carbonate | 0.0097 | 95 | 95 | 90.70 | 25 | 85 | 0.14 |
| 4-7 | 8% | Not added | 0.0097 | 95 | 95 | 90.70 | 25 | 85 | 0.14 |

| | | | | | | | | | |
|---|---|---|---|---|---|---|---|---|---|
| Note: In the examples in Table 4, in the slurry forming the functional layer, the binder is pure acrylic emulsion, where a mass ratio of the pure acrylic emulsion to boehmite is 34:3, the swelling degree D of the functional layer is 550%, the porosity P of the active material layer is 15%, and k is 0.008. | | | | | | | | | |

From the data in Table 4, it can be seen that the type of inorganic particles affects the safety performance of the secondary battery. This is mainly because different types of inorganic particles have different morphologies, and the morphology of the inorganic particles affects the appearance of the coating (for example flatness), thereby affecting the safety performance of the battery. In the current examples, the use of boehmite allows for better safety performance of the secondary battery.

Although illustrative embodiments have been demonstrated and described, a person skilled in the art should understand that the foregoing embodiments are not to be construed as limiting this application, and that some embodiments may be changed, replaced, and modified without departing from the spirit, principle, and scope of this application.

## Claims

1. An electrochemical apparatus, comprising an electrode assembly, wherein the electrode assembly comprises an electrode plate, the electrode plate comprises a current collector, the current collector comprises a first region and a second region, an active material layer is disposed in the first region, a functional layer is disposed in the second region, and a volume ratio of the functional layer to the active material layer is R, wherein 1%≤R≤10%.

2. The electrochemical apparatus according to claim 1, wherein the electrochemical apparatus satisfies R≥k/(D×P), wherein D is a swelling degree of the functional layer, P is a porosity of the active material layer, and 0.004≤k≤0.008.

3. The electrochemical apparatus according to claim 1, wherein the swelling degree of the functional layer is D, and 200%≤D≤800%.

4. The electrochemical apparatus according to claim 1, wherein the porosity of the active material layer is P, and 5%≤P≤25%.

5. The electrochemical apparatus according to claim 1, wherein the functional layer comprises a polymer formed by at least one of acrylic monomers, acrylate monomers, or styrene monomers.

6. The electrochemical apparatus according to claim 5, wherein based on a mass of the functional layer, a mass percentage of the polymer is 30% to 100%.

7. The electrochemical apparatus according to claim 5, wherein the functional layer further comprises inorganic particles; and the inorganic particles comprise at least one of boehmite, empholite, aluminum oxide, barium sulfate, calcium sulfate, or calcium silicate.

8. The electrochemical apparatus according to claim 1, wherein the electrochemical apparatus satisfies at least one of conditions (a) to (c):
(a) an electrolyte retention rate of the functional layer is 40% to 120%;
(b) in a nondestructive ultrasonic intelligent diagnostic system test, wherein along a thickness direction of the electrochemical apparatus, an ultrasound is emitted to the electrochemical apparatus, to obtain a signal feedback distribution diagram of the electrochemical apparatus for the ultrasound, and based on an area of the electrochemical apparatus in the signal feedback distribution diagram, an area percentage of a region with an ultrasound signal intensity greater than or equal to 1333 mV is 30% to 95%; or
(c) the electrochemical apparatus has a flatness of 0 mm to 0.5 mm.

9. The electrochemical apparatus according to claim 1, wherein the electrode assembly is a wound electrode assembly, a winding start end and a winding terminal end of the current collector are provided with the second region, and the functional layer is disposed in the second region of the terminal end.

10. An electronic apparatus, comprising the electrochemical apparatus according to any one of claims 1 to 9.
